# EUROPÄISCHE PATENTSCHRIFT

(11) **EP 0 516 614 B1**
(45) Veröffentlichungstag und Bekanntmachung des Hinweises auf die Patenterteilung: **29.03.1995**
(21) Anmeldenummer: 92890129.7
(22) Anmeldetag: 27.05.1992
(51) Int. Cl.: B65G 17/38, F16G 13/10, F16G 13/07

(54) **Kreuzgelenkkette**
Chain of the cardan type
Chaîne cardan

(30) Priorität: 28.05.1991 AT 1075/91
(43) Veröffentlichungstag der Anmeldung: 02.12.1992
(73) Patentinhaber: RüBIG Gesellschaft m.b.H. & Co.KG., A-4600 Wels (AT)
(72) Erfinder: Rübig, Helmut, A-4600 Wels (AT)
(74) Vertreter: Hübscher, Heiner, Dipl.-Ing.

(56) Entgegenhaltungen:
- DE-C- 67 389
- US-A- 1 893 141
- US-A- 3 410 085

## Beschreibung

Die Erfindung bezieht sich auf eine Kreuzgelenkkette, bestehend aus jeweils paarweise über ein Gelenkglied aneinander angelenkten Kettengliedern, wobei die Gelenkglieder zwei zueinander normalachsige Lageraugen zur drehbaren Aufnahme von Lagerzapfen der Kettenglieder bilden.

Kreuzgelenkketten haben sich wegen ihrer räumlichen Beweglichkeit und ihrer Führungsmöglichkeit vor allem als Transport- und Förderketten für die verschiedensten Einsatzbereiche an sich bereits gut bewährt, doch ist bisher der Herstellungsaufwand solcher Ketten verhältnismäßig hoch. Die Gelenkverbindung zwischen Kettenglied und Gelenkglied bedarf nämlich eigener bolzenförmiger Lagerzapfen, die in die Lageraugen der Gelenkglieder eingesteckt und an den Kettengliedern verankert werden mässen. Es sind daher mehrteilige Kettenglieder erforderlich und das Zusammensetzen der Kette aus den einzelnen Gliedern erfordert ein Verschrauben bzw. ein Vernieten der Lagerzapfen mit den übrigen Kettengliederteilen, was nicht nur umständlich und arbeitsintensiv ist, sondern vor allem auch die Zerlegbarkeit der Kette oder den Austausch einzelner Glieder u.dgl. wesentlich beeinträchtigt.

Der Erfindung liegt daher die Aufgabe zugrunde, diese Mängel zu beseitigen und eine Kreuzgelenkkette der eingangs geschilderten Art zu schaffen, die sich bei voller Funktionstächtigkeit durch ihre rationelle Herstellung und ihre einfachen Handhabungsmöglichkeiten auszeichnet.

Die Erfindung löst diese Aufgabe dadurch, daß die Kettenglieder einteilig mit als Lagerzapfen dienenden Querschenkeln und die Querschenkel miteinander verbindenden Längsschenkeln hergestellt sind, wobei die Längsschenkel in einem zur Querschenkelachse normalen Längsschnitt eine gegenüber dem Querschenkeldurchmesser verkleinerte Dicke besitzen, und daß die Gelenkglieder in die Lageraugen führende Einsteckschlitze aufweisen, deren lichte Weite größer als die Längsschenkeldicke, aber kleiner als der Querschenkeldurchmesser ist. Die ganze Kreuzgelenkkette läßt sich so aus nur zwei Gliederarten, nämlich den Kettengliedern und den Gelenkgliedern aufbauen, wobei diese Glieder jeweils einteilig gefertigt sind und der Aufbau der Kette durch ein einfaches Zusammenstecken der Glieder erfolgt. Dazu werden die Kettenglieder mit ihren Querschenkeln axial in die Lageraugen der Gelenkglieder eingeschoben, wobei die Kettenglieder so verdreht sein müssen, daß die Längsschenkel quer durch den Einsteckschlitz hindurchbewegt werden, und ein Verschwenken der Kettenglieder aus dieser Einschiebeposition führt sofort zur Gelenkverbindung. Mit diesen zusammensteckbaren Gliedern lassen sich die Kreuzgelenkketten nicht nur in ihrer Länge ohne jede Schwierigkeiten an die jeweiligen Gegebenheiten anpassen, sondern es ist auch durchaus möglich, jederzeit Kettenglieder auszutauschen oder die Kette wieder zu zerlegen. Die Einteiligkeit der Glieder erlaubt eine rationelle Herstellung in einem Schmiede- oder Gußverfahren, doch gibt es grundsätzlich keinerlei Herstellungsbeschränkungen.

Weisen die Gelenkglieder die Form eines U-Bügels auf, in dessen Schenkel- und Scheitelbereichen die Lageraugen vorgesehen sind und zwischen dessen Schenkeln der zum Lagerauge im Scheitelbereich führende Einsteckschlitz verläuft, kommt. es zu einer zweckmäßigen Konstruktion der Gelenkglieder, da sich durch den Scheitelbereich des U-Bügles und dessen Schenkel praktisch von selbst das eine Lagerauge und der zu diesem führende Einsteckschlitz ergeben. Zur Fertigstellung der Gelenkglieder bedarf es dann nur noch eines ensprechenden Lochens und Schlitzens der beiden Schenkel, so daß zusammen mit in ihrer Grundform rechteckigen Kettengliedern eine besonders rationelle Kreuzgelenkkette entsteht.

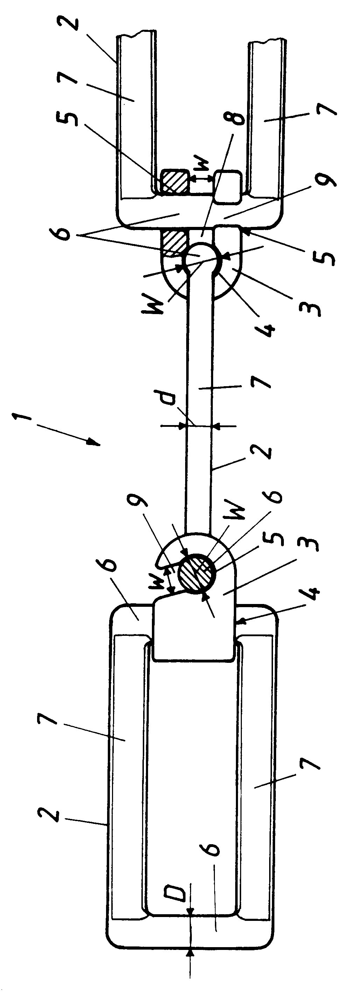

In der Zeichnung ist eine erfindungsgemäße Kreuzgelenkkette an Hand einer teilgeschnittenen Seitenansicht näher veranschaulicht.

Eine Kreuzgelenkkette 1 besteht aus in ihrer Grundform rechteckigen Kettengliedern 2, die jeweils in Kettenlängsrichtung um 90° winkelversetzt über Gelenkglieder 3 paareise aneinander angelenkt sind. Die Gelenkglieder 3 weisen die Form eines U-Bügles auf und bilden sowohl im Scheitelbereich als auch im Schenkelbereich Lageraugen 4, 5 mit zueinander normalen Achsen zur Aufnahme von Lagerzapfen der Kettenglieder 2. Als Lagerzapfen dienen die Querschenkel 6 der einteiligen Kettenglieder 2, welche Querschenkel 6 miteinander über Längsschenkel 7 verbunden sind, wobei die Längsschenkel 7 in einem zur Querschenkelachse normalen Längsschnitt eine gegenüber dem Durchmesser D der Querschenkel 6 kleinere Dicke d besitzen. Die Gelenkglieder 3 weisen zu jedem Lagerauge 4, 5 führende Einsteckschlitze 8, 9 auf, deren lichte Weite an die Dicke d der Längsschenkel 7 angepaßt und kleiner als die lichte Weite W der Lageraugen bemessen bleibt, so daß die Querschenkel 6 in die Lageraugen 4, 5 und die Längsschenkel 7 in die Einsteckschlitze 8, 9 passen.

Die Kettenglieder 2 und die Gelenkglieder 3 lassen sich einfach zusammensetzen, indem die Kettenglieder 2 gegenüber den Gelenkgliedern 3 so verdreht werden, daß die Querschenkel 6 und die Längsschenkeln 7 mit den zugehörigen Lageraugen 4, 5 und Einsteckschlitzen 8, 9 übereinstimmen, und dann seitlich ineinandergeschoben werden. Ein Relativverdrehen der jeweiligen Gliederpaare bringt dann zwangsweise die gewünschte Gelenksverbindung mit sich. Es entsteht eine voll funktionstüchtige Kreuzgelenkkette, die lediglich zwei jeweils einteilige Gliederarten aufweist und sich mit wenigen Handgriffen zusammensetzen oder zerlegen läßt.

## Patentansprüche

1. Kreuzgelenkkette (1), bestehend aus jeweils paarweise über ein Gelenkglied (3) aneinander angelenkten Kettengliedern, wobei die Gelenkglieder zwei zueinander normalachsige Lageraugen (4, 5) zur drehbaren Aufnahme von Lagerzapfen (6) der Kettenglieder (2) bilden, dadurch gekennzeichnet, daß die Kettenglieder (2) einteilig mit als Lagerzapfen dienenden Querschenkeln und die Querschenkel miteinander verbindenden Längsschenkeln (7) hergestellt sind, wobei die Längsschenkel (7) zumindest im Anschlußbereich an die Querschenkel in einem zur Querschenkelachse normalen Längsschnitt eine gegenüber dem Querschenkeldurchmesser (D) verkleinerte Dicke (d) besitzen, und daß die Gelenkglieder (3) in die Lageraugen (4, 5) führende Einsteckschlitze (8, 9) aufweisen, deren lichte Weite (W) größer als die Längsschenkeldicke (d), aber kleiner als der Querschenkeldurchmesser ist.

2. Kreuzgelenkkette nach Anspruch 1, dadurch gekennzeichnet, daß die Gelenkglieder (3) die Form eines U-Bügels aufweisen, in dessen Schenkel- und Scheitelbereichen die Lageraugen (4, 5) vorgesehen sind und zwischen dessen Schenkeln der zum Lagerauge (4) im Scheitelbereich führende Einsteckschlitz (8) verläuft.

## Claims

1. A universally jointed chain (1), consisting of pairs of chain links articulated on one another via an articulation member (3), the articulation members forming two lugs (4, 5), the axes of which are normal to one another, for rotatably receiving pivots (6) of the chain links (2), characterised in that the chain links (2) are made in one piece with transverse limbs serving as pivots and with longitudinal limbs (7) interconnecting the transverse limbs, the longitudinal limbs (7) having, in a longitudinal section normal to the transverse limb axis, a thickness (d) which, at least in the zone where the longitudinal limbs are connected to the transverse limbs, is reduced compared with the transverse limb diameter (D), and in that the articulation members (3) have insertion slots (8, 9) leading into the lugs (4, 5), the inside diameter (W) of said slots being larger than the longitudinal limb thickness (d) but smaller than the transverse limb diameter.

2. A universally jointed chain according to claim 1, characterised in that the articulation members (3) have the shape of a U-stirrup, the lugs (4, 5) being provided in the limb and apex zones while the insertion slot (8) leading in the apex zone to the lug (4) extends between the U-stirrup limbs.

## Revendications

1. Chaîne à articulation croisée (1), composée de maillons articulés par paires les uns aux autres par l'intermédiaire d'un organe d'articulation (3), les organes d'articulation constituant deux oeillets de palier (4, 5) chacun d'axe perpendiculaire par rapport à l'autre, pour loger en permettant la rotation des tourillons de palier (6) des maillons (2),
caractérisée en ce que les maillons (2) sont fabriqués d'un seul tenant avec des branches transversales servant de tourillons de palier et des branches longitudinales (7) assurant la liaison des branches transversales entre elles, les branches longitudinales (7) ayant, au moins dans la zone de raccordement aux branches transversales, dans une coupe longitudinale perpendiculaire par rapport à l'axe de branches transversales, une épaisseur (d) diminuée par rapport au diamètre (D) des branches transversales, et en ce que les organes d'articulation (3) présentent des fentes (8, 9) d'enfichage assurant le guidage dans les oeillets (4, 5) de palier, fentes dont la largeur libre (W) est supérieure à l'épaisseur (d) des branches longitudinales, mais inférieure au diamètre des branches transversales.

2. Chaîne à articulation croisée selon la revendication 1,
caractérisée en ce que les organes d'articulation (3) présentent la forme d'un étrier en U, dans les zones de branches et de sommet duquel les oeillets (4, 5) de palier sont prévus et entre les branches duquel s'étend la fente (8) d'enfichage assurant le guidage vers l'oeillet (4) de palier dans la zone de sommet.
